Europäisches Patentamt

European Patent Office

Office européen des brevets

(19)

(11) Publication number: **0 162 130**
A1

# (12) EUROPEAN PATENT APPLICATION

(21) Application number: **84112065.2**

(22) Date of filing: **09.10.84**

(51) Int. Cl.⁴: **B 29 B 7/76**

(30) Priority: **23.03.84 US 593041**

(43) Date of publication of application:
**27.11.85 Bulletin 85/48**

(84) Designated Contracting States:
**AT BE CH DE FR GB IT LI NL SE**

(71) Applicant: **Krauss-Maffei Aktiengesellschaft**
**Krauss-Maffei-Strasse 2**
**D-8000 München 50(DE)**

(72) Inventor: **Schneider, Philipp**
**Wehrwiesenstrasse 12**
**D-8834 Pappenheim(DE)**

(74) Representative: **Konle, Tilmar, Dipl.-Ing.**
**Benderstrasse 23a**
**D-8000 München 60(DE)**

(54) **Multi-composition mixing head.**

(57) A multi-composition mixing head (1) having a housing (2) formed with a passageway (3) communicating with a mold cavity (M), with a pair of mixing chambers (8,8') opening laterally and separately into the passageway (3), each mixing chamber (8,8') being formed with an inlet orifice (13,13') for the introduction therein of a reactive component and a respective mixing piston (9,9') displaceable in each chamber (8,8') between an advanced position in which the piston (9,9') expels a mixture from the chamber (8,8') into the passageway (3) while blocking communication between the inlet orifices (13,13') and the chamber (8,8') and a retracted position wherein the inlet orifices (13,13') open freely into the chamber (8,8'), whereby the respective chambers are effective to independently feed respective mixtures of respective reactive components into the passageway (3) under the control of the respective mixing piston (9,9'), wherein a plunger (7) displaceable in the passageway (3) expels the mixtures of the components therefrom.

EP 0 162 130 A1

./...

Fig.1

TK 254a

MULTI-COMPOSITION MIXING HEAD


SPECIFICATION


Field of the Invention

The present invention relates, in general, to mixing heads for reactive components which form a moldable synthetic resin, and, more particularly, to a multi-composition mixing head in which more than one mixture can be formed.

Background of the Invention

In the production of synthetic-resin articles, the separate reactive components which form the resin are usually introduced into a mixing chamber where they mix prior to being fed into a mold cavity, examples of this being shown in U.S. Patents 4,226,543, 4,379,122, 3,706,515, 3,799,199 and 3,975,128.

In the production of synthetic-resin articles formed by more than one resin, it has been the practice to either shift the mold from one mixing head where a particular resin has been introduced into the mold, to another mixing head where a different resin is then introduced into the mold, forming a multi-composition article, or the mold involved can remain stationary and the respective mixing heads carrying different resins can be shifted to introduce same into the mold.

Aside from the shifting method described for forming multi-composition articles being cumbersome and causing interruptions in production, the time delay caused when either the mixing head or mold can have serious drawbacks in that when the reactive components are introduced into the mixing chamber, the resin formed starts
almost immediately to harden, so that to form an article
which truly conforms to the shape of the mold cavity,
the mixture formed in the mixing chamber should be introduced into the mold cavity as fast as possible, while
the mixture is still moldable.

Objects of the Invention

It is therefore an object of the present invention to
provide an improved mixing head in which more than one
kind of mixture can be formed.

It is another object of the present invention to provide an improved mixing head which can feed respective
mixtures into the same mold cavity independently of one
another to form a multi-composition article.

Summary of the Invention

The above and other objects of the invention are realized in a mixing head in which a housing is formed with
a central passageway communicating with a mold cavity,
and a pair of mixing chambers formed in the housing,
one on either side of the passageway feeding separately
therein.

Each mixing chamber is formed with a pair of inlet orifices for the introduction therein of respective reactive components which when mixed in the chamber form a
synthetic resin, each inlet orifice being associated
with a respective outlet opening closely spaced therefrom with the inlet orifice being positioned between
the outlet and the passageway, the outlet opening
also communicating with the mixing chamber.

A mixing piston is provided in each mixing chamber and is displaceable therein between an advanced position in which the piston expels a mixture from the chamber into the passageway while blocking communication between the inlet orifices and the chamber and a retracted position wherein the inlet orifices open freely into the chamber and the outlet openings are blocked. Each mixing piston is formed with a pair of elongated grooves in the surface thereof, each groove being in alignment with a respective inlet orifice and associated outlet opening so that in the advanced position of the piston, each inlet orifice and its associated outlet opening can communicate by way of the respective groove, through which a respective reactive component can be circulated by means such as a pump and reservoir of reactive component connected between the inlet orifice and outlet opening.

A plunger is provided in the central passageway and is displaceable therein for driving mixtures expelled into the passageway from the mixing chamber into a mold cavity.

Brief Description of the Drawing

The above and other objects, features and advantages of the invention will become more readily apparent from the following description, reference being made to the accompanying drawing, in which:

Fig. 1 is a longitudinal sectional view through a mixing head according to the invention;

Fig. 2 is a sectional view taken along line II-II of Fig. 1;

Fig. 3 is a sectional detail view drawn to an enlarged scale of one of the needle valves shown in Fig. 1; and

Fig. 4 is a view similar to Fig. 2 showing the plunger in the advanced position.

Specific Description

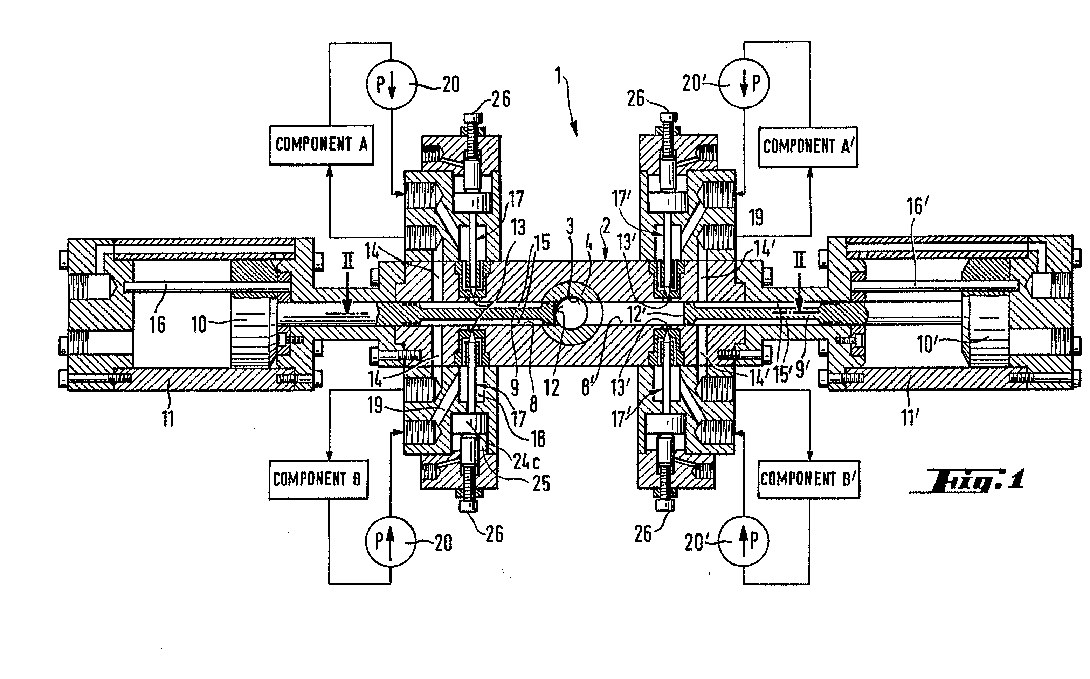

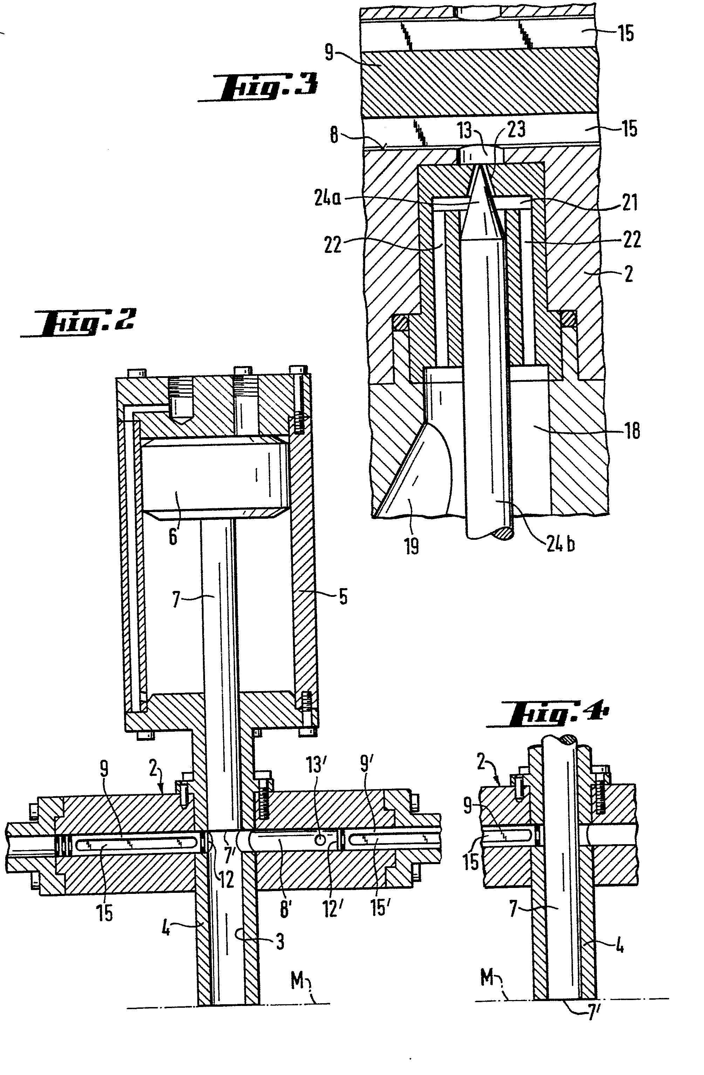

Figs. 1 and 2 show a mixing head 1 according to the invention, in which a central housing or body 2 is provided with a passageway 3 formed in a sleeve 4 which extends from the housing 1 and is adapted at one end thereof for engagement with a mold M, the other end of the sleeve 4 being provided with a cylinder 5 in which a double-acting piston 6, formed with a plunger 7 extending into the passageway 3, is displaceable to advance the plunger 7 from the retracted position shown in Fig. 2 to the position shown in Fig. 4, where the end face 7' of the plunger 7 lies flush with the cavity of the mold M.

The housing 2 is further formed with a pair of identical mixing chambers 8 and 8' opening laterally into passageway 3, each mixing chamber 8, 8' being provided with identical mixing pistons 9 and 9' respectively, which are displaceable by respective enlarged double-acting piston heads 10 and 10' in respective cylinders 11 and 11', from the retracted position illustrated in Fig. 1 for mixing piston 9' to the advanced position shown for mixing piston 9, where the end face 12 thereof lies tangient to the passageway 3. Pairs of inlet orifices 13 and 13' open laterally into respective mixing chambers 8 an 8' for the admission therein of respective reactive components, each pair of inlet orifices 13 and 13' being associated with respective pairs of outlet openings 14 and 14' also communicating with respective mixing chambers 8 and 8'. Pairs of longitudinal grooves 15 and 15' are formed in respective mixing pistons 9 and 9', each groove being in alignment with a respective inlet orifice and its associated outlet opening, this alignment being maintained by guide bars 16 and 16' provided in respective cylinders 11, 11' and passing through respective enlarged piston heads 10 and 10' preventing their rotation.

The inlet orifices 13 and 13' are each provided with respective needle valves 17 and 17', as shown in Figs. 1 and 3, for adjusting the flow of respective reactive components A and B into chamber 8 and respective reactive components A' and B' into chamber 8'. The pairs of needle valves 17 and 17' are identical and comprise, by way of illustration for one of needle valves 17, a first compartment 18 formed in housing 2 and spaced from mixing chamber 8 and connected directly with a source of reactive component, in this case component B, by way of a channel 19 formed in housing 2 and fed by a pump 20. A second compartment 21 is formed in housing 2 between compartment 18 and chamber 8 and is connected with compartment 18 through bores 22. A frustoconical valve seat 23 is formed between compartment 21 and chamber 8 and communicates therebetween and is adapted to receive the conical tip 24a of valve stem 24b which extends through the compartments 21 and 18 into a space 25 in which the enlarged head 24c of valve stem 24b is guided. An adjustment screw 26 is threaded into the housing 2 and engages the head 24c for the adjustment of the conical tip 24a relative to the valve seat 23.

In operation, with reference to Fig. 1, the double-acting piston 10' has displaced the mixing piston 9' into its retracted position, whereby the outlet openings 14' are blocked and the inlet orifices 13' are unblocked and can feed the reactive components A' and B' into the mixing chamber 8' driven by the pumps 20', where the mixture formed is then expelled into the passageway 3 by the advance of mixing piston 9' under the influence of double-acting piston 10' until the end face 12' thereof lies tangient to passageway 3, into the position illustrated for mixing piston 9, which is shown in the advanced position, displaced there by the double-acting piston 10 with the end face 12 lying tangient to the passageway 3, the inlet orifices 13 communicating with their associated outlet openings 14 by way of the respective grooves 15, through which forced but separate circulation of components A and B is established and maintained by the pumps 20, all of which are shown in respective circuits in diagrammatic form, as are the pumps 20' and sources of components A' and B'. The respective mixture expelled into the passageway 3 is then expelled from the passageway into the mold M by the advance of the plunger 7, from its retracted position shown in Fig. 2 with the end face 7' thereof lying tangent to the mixing chambers 8 and 8' during charging of the passageway 3 with a respective mixture, to the advanced position shown in Fig. 4 where the end face 7' lies flush with the end of passageway 3.

As illustrated in Fig. 1, the mixing pistons 9 and 9' operate sequentially to alternately feed two different mixtures into the same mold M, one after the other, to form a molded synthetic resin article having at least two layers of resin which are of different mixtures, or, if desired, a plurality of layers of two different mixtures.

Although the mixing head 1 has been illustrated to operate sequentially, it is within the scope of the invention to operate the mixing pistons simultaneously to produce a molded synthetic resin article of two different mixtures which are not layered.

0162130

- 8 -

WHAT IS CLAIMED IS:

1. A multi-composition mixing head, said mixing head comprising:

a housing formed with a passageway communicating with a mold cavity;

a pair of mixing chambers formed in said housing and opening laterally and separately into said passageway, each of said mixing chambers comprising:

a pair of inlet orifices formed in said housing and opening into the respective mixing chamber for the introduction of respective reactive components therein,

respective outlet openings formed in said housing and spaced from said inlet orifices and communicating with said chamber, each of said inlet orifices being positioned between the respective outlet opening thereof and said passageway,

a mixing piston displaceable in said chamber between an advanced position in which said mixing piston expels a mixture from said chamber and a retracted position wherein said inlet orifices open freely into said chamber, said mixing piston being formed with a pair of elongated grooves, each of said grooves being in alignment with a respective inlet orifice and outlet opening in said advanced position of said mixing piston, each of said inlet orifices communicating with the respective outlet opening thereof by way of said respective groove, and means provided between each of said inlet orifices and the respective outlet openings thereof for the forced circulation of said reactive components in the advanced position of each mixing piston whereby the respective mixing chambers are effective to independently feed respective mixtures of respective reactive components to said passageway under the control of the respective mixing piston; and

a plunger displaceable in said passageway for expelling mixtures of said components therefrom.

2. The mixing head defined in claim 1 wherein each of said inlet orifices is provided with a respective adjustable feed valve, each of said feed valves comprising:

a first compartment formed in said housing spaced from the respective mixing chamber and connected directly with a source of the respective reactive component;

a second compartment formed in said housing between said first compartment and said mixing chamber and spaced therefrom;

a plurality of bores formed in said housing and connecting said first and second compartments;

a frustoconical valve seat formed in said housing between said second compartment and said mixing chamber and communicating therebetween and diverging toward said second chamber;

an elongated valve stem extending through said first and second compartments and formed at one end thereof with a conical tip receivable in said valve seat and the other end of said stem being formed with an enlarged head guided in a space formed in said housing; and

and adjustment screw threaded in said housing and engaging said enlarged head.

3. The mixing head defined in claim 2 wherein each of said mixing pistons is further formed with a double-acting enlarged piston head displaceable in a cylinder by a pressurized fluid, said cylinder being provided with a guide bar extending the length thereof and lying parallel to the axis of said mixing piston, said guide bar passing through a bore formed in said piston head for preventing the rotation of said mixing piston and maintaining the alignment of said grooves with the respective inlet orifice and outlet opening.

4. The mixing head defined in claim 3 wherein said passageway has a circular cross section and the end face of each of said mixing pistons lies tangent to said passageway in the advanced position of the respective mixing piston.

5. The mixing head defined in claim 4 wherein said mixing chambers lie in axial alignment with one another on opposite sides of said passageway.

6. The mixing head defined in claim 5 wherein the end face of said plunger lies flush with the open end of said passageway in the advanced position of said plunger.

7. The mixing head defined in claim 6 wherein said passageway is formed in a sleeve provided in said housing and extending outwardly therefrom.

0162130

Fig.1

Fig.2

Fig.3

Fig.4

| | DOCUMENTS CONSIDERED TO BE RELEVANT | | EP 84112065.2 |
|---|---|---|---|

| Category | Citation of document with indication, where appropriate, of relevant passages | Relevant to claim | CLASSIFICATION OF THE APPLICATION (Int. Cl.4) |
|---|---|---|---|
| A | EP - A1 - 0 024 330 (BAYER AG)<br>* Totality *<br>-- | 1-6 | B 29 B 7/76 |
| A | DE - B2 - 2 645 937 (ELASTOGRAN)<br>* Totality *<br>-- | 1-6 | |
| A | DE - A1 - 2 814 688 (ELASTOGRAN)<br>* Totality *<br>-- | 1,2 | |
| D,A | US - A - 3 706 515 (KEUERLEBER)<br>* Totality *<br>-- | 1 | |
| D,A | US - A - 4 379 122 (TAUBENMANN)<br>* Totality *<br>---- | 1 | |
| | | | TECHNICAL FIELDS SEARCHED (Int. Cl.4)<br><br>B 29 B |

The present search report has been drawn up for all claims

| Place of search | Date of completion of the search | Examiner |
|---|---|---|
| VIENNA | 02-08-1985 | REININGER |